Europäisches Patentamt

European Patent Office

Office européen des brevets

(19)

(11) Numéro de publication: **0 243 234 B1**

(12) **FASCICULE DE BREVET EUROPEEN**

(45) Date de publication de fascicule du brevet: **11.11.92** (51) Int. Cl.⁵: **G02B 6/44**

(21) Numéro de dépôt: **87400821.2**

(22) Date de dépôt: **10.04.87**

(54) **Dispositif et procédé d'épanouissement de fibres optiques sortant d'un câble à raccorder.**

(30) Priorité: **17.04.86 FR 8605523**

(43) Date de publication de la demande:
**28.10.87 Bulletin 87/44**

(45) Mention de la délivrance du brevet:
**11.11.92 Bulletin 92/46**

(84) Etats contractants désignés:
**BE CH DE GB IT LI NL SE**

(56) Documents cités:
**EP-A- 0 083 101
FR-A- 2 517 132
GB-A- 2 014 753
GB-A- 2 022 284
US-A- 3 910 678**

**IEEE GLOBAL TELECOMMUNICATIONS
CONFERENCE, GLOBECOM '83, 28 novembre
- 1 décembre 1983, San Diego, Californie,
World Communications Year - A time for
planning, pages 1165-1169, IEEE; M. DE VEC-
CHIS et al.: "Overview of the cylindrical
grooved structure"**

(73) Titulaire: **SAT Société Anonyme de Télécommunications
41, rue Cantagrel
F-75631 Paris Cedex 13(FR)**

Titulaire: **SOCIETE INDUSTRIELLE DE LIAI-
SONS ELECTRIOUES (SILEC)
64 bis, rue de Monceau
F-75008 Paris(FR)**

(72) Inventeur: **Garcia, Marcel
41 rue Cantagrel
F-75631 Paris Cedex 13(FR)**
Inventeur: **Suillerot, Didier Maurice Didier
41 rue Cantagrel
F-75631 Paris Cedex 13(FR)**

(74) Mandataire: **Cabinet Martinet & Lapoux
BP 405
F-78055 Saint Ouentin en Yvelines
Cédex(FR)**

## Description

La présente invention concerne un dispositif d'épanouissement de fibres optiques sortant d'un câble afin de libérer les fibres optiques du câble en vue de les lover et de les raccorder à des fibres optiques d'autres câbles dans un boîtier de raccordement pour fibres optiques. L'invention se rapporte ainsi à des opérations précédant des connexions fibre à fibre, et plus précisement à la fixation d'une extrémité dégainée du câble au boîtier et à la séparation des extrémités de fibre et d'une âme du câble.

Dans des boîtiers de raccordement connus n'est prévu qu'un presse-étoupe pour fixer un câble gainé dans un orifice d'une paroi du boîtier. A l'intérieur du boîtier, à partir de la paroi, le câble est dégainé et les fibres sortent de l'âme du câble, préalablement sciée, sans précaution particulière. Cependant il s'est avéré que les fibres sortant telles quelles du câble peuvent être endommagées au cours d'opérations de lovage et de positionnement dans le boîtier en vue d'introduire leurs extrémités dans des connecteurs logés dans le boîtier.

La présente invention vise à fournir un dispositif destiné à épanouir des fibres optiques sortant d'une extrémité d'un câble et pénétrant respectivement dans des gaines de protection individuelles, et à rendre solidaires les gaines de protection avec l'extrémité du câble afin que les gaines ne puissent glisser sur les fibres au cours de manipulations ultérieures.

A ces fins, un dispositif pour épanouir selon l'invention est caractérisé en ce qu'il comprend un embout fixable coaxialement à l'extrémité du câble et comportant un tronçon de révolution ayant des premières rainures externes longitudinales, dans chaque première rainure étant logée une extrémité d'une gaine de protection contenant avec jeu une fibre et s'étendant au delà du câble, les premières rainures ayant une profondeur sensiblement inférieure au diamètre des gaines de protection, une bague fendue ayant une fente longitudinale et entourant le tronçon de révolution, et des moyens pour resserrer la bague fendue par rétrécissement de la fente afin d'enfoncer et coincer les extrémités des gaines de protection dans les premières rainures.

Selon l'invention, pour procéder à l'épanouissement des fibres optiques sortant de l'extrémité du câble et simultanément à la solidarisation des extrémités des gaines de protection à l'extrémité du câble par l'intermédiaire de l'embout, on procède

à une fixation de l'embout à l'extrémité du câble, et un enfilement de la bague fendue autour du tronçon de révolution de l'embout,

et pour chaque fibre, à une superposition de la fente de la bague fendue d'une première rainure respective, une introduction de l'extrémité de la gaine de protection de la fibre dans la première rainure respective à travers la fente, et un enfoncement de la gaine de protection dans la première rainure respective suite à une rotation partielle de la bague fendue pour superposer la fente et une autre première rainure,

et, après introduction et enfoncement des extrémités de toutes les gaines de protection dans les premières rainures respectivement, à un serrage de la bague fendue autour du tronçon de révolution de l'embout par rétrécissement de la fente afin de coincer les extrémités des gaines de protection dans les premières rainures.

La bague fendue comporte un alésage ayant des cannelures, de préférence en dents de scie et à section transversale circulaire, afin que celles-ci pénètrent sensiblement dans les gaines de protection et retiennent les gaines contre toute traction ultérieure.

Selon une autre caractéristiques du dispositif, les moyens pour resserrer comportent une bague de serrage ayant un alésage tronconique coopérant avec une surface tronconique externe de la bague fendue, la bague de serrage étant glissée longitudinalement, de préférence par vissage autour d'un fourreau entourant l'embout et solidaire de celui-ci, afin de resserrer la bague fendue autour du tronçon de révolution de l'embout et pousser axialement la bague fendue contre une butée intégrée à l'embout, en vissant la bague de serrage.

Par ailleurs, la fixation de l'embout à l'extrémité du câble peut comprendre d'une part, l'enfilement d'une extrémité dégainée d'une âme, sous la forme d'un jonc rainuré du câble, dans un alésage de l'embout ayant au moins un doigt engrenant avec une rainure du jonc, afin de solidariser en rotation l'embout et le câble, d'autre part, une introduction d'une extrémité dégagée d'une armature centrale du câble entre au moins deux mâchoires logeables dans l'embout, et un pincement de l'extrémité d'armature entre les deux mâchoires afin de solidariser, notamment en translation longitudinale, l'embout et le câble.

Selon d'autres caractéristiques de l'invention, l'embout comporte un second tronçon de révolution, de préférence tronconique et convergeant vers le câble, fixable autour de l'extrémité du câble, et ayant des troisièmes rainures externes longitudinales respectivement en alignement avec une ou plusieurs premières rainures, chaque troisième rainure recevant de préférence une ou plusieurs fibres optiques sortant d'une même rainure périphérique de l'âme du câble. Un fourreau ayant un alésage enfilé autour de l'extrémité du câble et un alésage complémentaire au second tronçon de l'embout est prévu pour coiffer ce second tronçon et ainsi fermer les troisièmes rainures, ce qui évite tout échappement des fibres et contribue à la protection des fibres entre leur sortie du câble et leur entrée dans les gaines de protection. Le fourreau coopère par vissage avec la bague de serrage pour former un raccord-union renfermant complètement l'embout. Au cours du vissage de la bague de serrage autour du fourreau, le glissement de l'alésage tronconique de la bague de serrage contre la surface tronconique de la bague fendue provoque le resserrement de la bague fendue autour de l'embout.

D'autres avantages et caractéristiques de l'invention apparaîtront plus clairement à la lecture de la description suivante de plusieurs réalisations préférées de l'invention en référence aux dessins annexés correspondants dans lesquels :

- la Fig.1 est une vue longitudinale partiellement en coupe axiale d'un premier dispositif d'épanouissement de fibres optiques fixé à une extrémité d'un premier câble à fibres optiques ;
- la Fig.2 est une vue en perspective d'un jonc à rainures hélicoïdales formant âme du premier câble ;
- la Fig.3 est une section transversale du premier câble, chaque rainure du jonc contenant une fibre optique ;
- les Figs.4, 5, 6 et 7 sont des vues longitudinale et de face arrière, de face avant et en coupe axiale prise le long de la ligne VII-VII de la Fig.4, d'un embout répartiteur rainuré inclus dans le premier dispositif, respectivement ;
- les Figs.8 et 9 sont des vues longitudinale et en coupe axiale prise le long de la ligne IX-IX de la Fig.8, d'un fourreau de raccord-union inclus dans le premier dispositif, respectivement ;
- les Figs.10 et 11 sont des vues de face avant et longitudinale partiellement en coupe axiale prise le long de la ligne XI-XI de la Fig.10, d'une bague de serrage du raccord-union incluse dans le premier dispositif, respectivement ;
- les Figs.12 et 13 sont des vues de face avant et longitudinale partiellement en coupe axiale prise le long de la ligne XIII-XIII de la Fig.12, d'une bague fendue incluse dans le premier dispositif pour immobiliser des gaines de protection de fibre sortant de l'embout répartiteur, respectivement ;
- la Fig.14 est une vue en coupe détaillée montrant des cannelures internes à la bague fendue montrée aux Figs.12 à 13 ;
- la Fig.15 est une section détaillée d'un alésage rainuré arrière de l'embout répartiteur du premier dispositif recevant le jonc du premier câble ;
- les Figs.16 et 17 sont des vues de face arrière et en coupe axiale prise le long de la ligne XVII-XVII de la Fig.16, d'un élément logé dans l'embout répartiteur pour pincer une armature résistante centrale du premier câble, respectivement ;
- la Fig.18 est une vue en coupe axiale d'un second dispositif d'épanouissement de fibres fixé à une extrémité d'un second câble à fibres optiques ;
- la Fig.19 est une section transversale du second câble ayant un jonc doté de rainures contenant chacune trois fibres optiques ;
- les Figs.20 et 21 sont des vues longitudinales et en coupe axiale prise le long de la ligne XXI-XXI, d'un embout répartiteur rainuré inclus dans le second dispositif, respectivement ; et
- la Fig.22 est une vue avant et en coupe prise suivant la flèche F et la ligne XXII-XXII de la Fig.21 montrant une répartition de rainures à la périphérie de l'embout répartiteur dans le second dispositif.

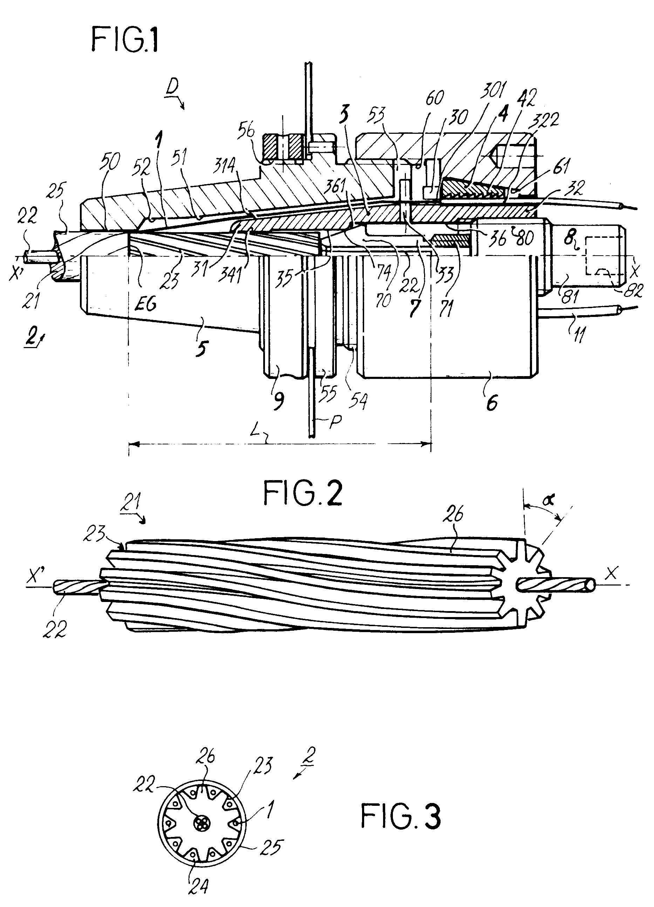

Selon une première réalisation illustrée à la Fig.1, un dispositif d'épanouissement de fibres optiques D est destiné à épanouir des extrémités de dix fibres optiques 1 sortant d'un câble 2 à structure connue.

Comme montré aux Figs.2 et 3, le câble 2 comprend une âme sous la forme d'un jonc 21 ayant une structure cylindrique longiligne en matière thermoplastique extrudée. Le jonc enrobe une armature porteuse résistante centrale 22, telle qu'un fil d'acier ou un toron de fils d'acier torsadés, ou autre. Dix rainures hélicoïdales parallèles 23 sont régulièrement réparties à la périphérie du jonc 21. Selon la première réalisation, chacune des rainures 23 contient une fibre optique 1, de préférence noyée dans de la graisse 24 pour protéger la fibre contre l'humidité. Les rainures 23 peuvent suivre des tracés hélicoïdaux tantôt directs tantôt rétrogrades. Les rainures ont une section trapézoïdale, ou en vé, semi-circulaire ou rectangulaire. Le câble comprend également une gaine externe 25, composée d'une ou plusieurs enveloppes enrubannées autour du jonc 21, comme montré à la Fig.3.

En référence à la Fig.1, le dispositif d'épanouissement D comprend un embout central, dit répartiteur 3, fixable à une extrémité sciée du jonc 21 pour épanouir les fibres 1 sortant du câble 2 parallèlement autour de l'axe longitudinal X'X du jonc 21, une bague fendue 4 pour introduire autour du répartiteur des extrémités de gaines de protection individuelles souples 11 contenant chacune avec jeu une fibre optique 1, un raccord-union 5-6 entourant le répartiteur et la bague fendue pour protéger les fibres 1 épanouies et resserrer la bague fendue 4 afin d'enfoncer et de coincer les gaines de protection 11 dans des rainures périphériques du répartiteur 3, et un élément pinçant 7 et une vis de serage 8 logeables dans le répartiteur pour ancrer le dispositif D à l'armature 22 du câble 2. Les différentes pièces composant le dispositif D ont des formes générales de révolution et sont diposées coaxialement à l'axe X'X. La plupart des pièces précitées sont en laiton, à l'exception de la bague fendue 4 qui est en bronze au bérylium.

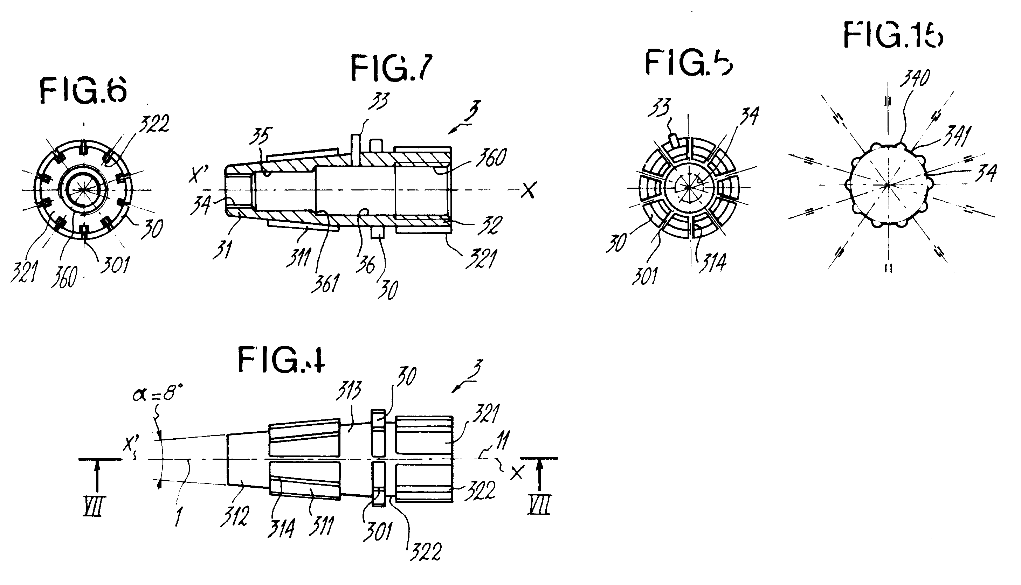

Le répartiteur 3 est montré en détail dans les Figs.4 à 7.

Vu de l'extérieur, le répartiteur 3 offre de part et d'autre d'une collerette 30, un tronçon tronconique arrière 31 convergeant à l'opposé de la collerette, en direction du câble 2, et un tronçon cylindrique avant 32. Le tronçon tronconique arrière 31 comporte une partie saillante tronconique 311 ayant une surface périphérique parallèle au tronçon 31 et partageant celui-ci en une surface arrière de dégagement tronconique lisse 312 située du côté du câble et une surface avant de dégagement tronconique lisse 313 accolée à la collerette 30. Le tronçon cylindrique avant 32 comporte également une partie saillante avant 321 qui est cylindrique, et une surface de dégagement lisse 322 qui est cylindrique et accolée à la collerette. Dans la partie saillante 311, La collerette 312 et la partie saillante 321 sont ménagées dix rainures composites périphériques 314-301-322, équiréparties autour de l'axe X'X. Chaque rainure composite est composée d'une première rainure 322 dans la partie saillante 321, d'une deuxième rainure 301 dans la collerette 30 et d'une troisième rainure 314 dans la partie saillante 311.

Les trois rainures 314, 301 et 322 composant une même rainure composite sont disposées dans un plan longitudinal axial du répartiteur 3. Les sections transversales des rainures sont rectangulaires ou peuvent être du même type que celles des rainures 23 du jonc 21. Les rainures 314 et 301 sont propres à recevoir une même fibre optique 1 sortant du câble 2, et ont une largeur sensiblement supérieure, typiquement de 0,7 mm, et une profondeur nettement plus grande que le diamètre d'une fibre qui est typiquement de 0,125 mm. En outre, les génératrices suivies par les fonds des deux rainures 314 et 301 sont de préférence concourantes au-dessus de la surface lisse 313 afin que la fibre optique 1 guidée dans ces rainures suive un cheminement régulier et soit porté complétement dans ces rainures. La rainure 322 est alignée longitudinalement avec la rainure 301, mais offre un fond sensiblement en retrait par rapport à celui de la rainure 301 et une largeur plus grande, typiquement de 1,4 mm, afin de recevoir sensiblement à force une extrémité d'entrée d'une gaine de protection 11 dans laquelle est guidée librement la fibre. La profondeur des rainures 301, typiquement de 1,25 mm est sensiblement plus petite que le diamètre externe des gaines 11, typiquement de 1,45 mm.

Le raccord-union 5-6 est composé, comme pièce mâle, d'un fourreau 5 destiné à protéger et maintenir les fibres optiques 1 dans les rainures 311 du tronçon tronconique 31 du répartiteur, et, comme pièce femelle, d'une bague de serrage 6 destinée à reserrer la bague fendue 4 autour du tronçon cylindrique 32 du répartiteur afin d'enfoncer et de coincer les extrémités des gaines 11 dans les rainures 322.

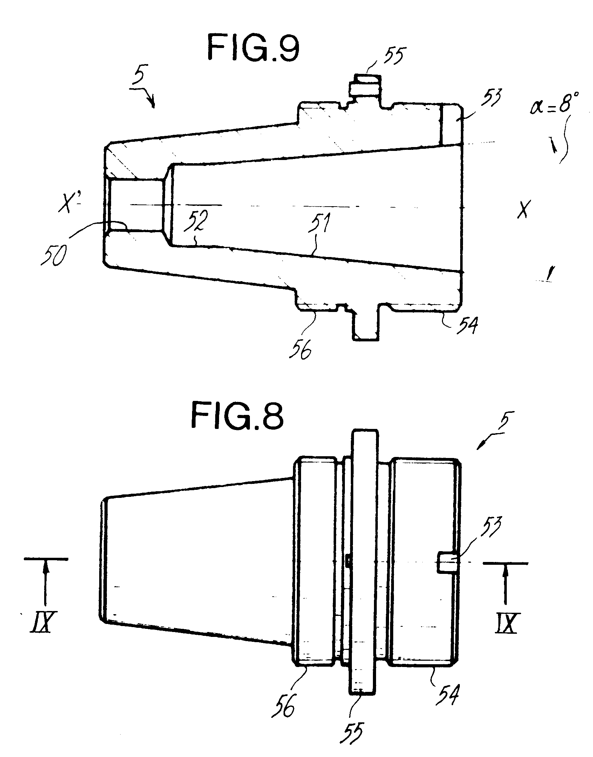

Comme montré aux Figs.8 et 9, le fourreau 5 comporte à l'arrière, du côté du câble 2, un alésage cylindrique 50 ayant un diamètre sensiblement égal au diamètre externe du câble gainé 2, et sur la majeure partie de sa longueur, un alésage tronconique 51 convergeant vers l'alésage 50 par l'intermédiaire d'un alésage cylindrique de dégagement 52 ayant une faible longueur et un diamètre plus grand que celui de l'alésage 50. L'alésage tronconique 51 a un angle au sommet $\alpha$ typiquement de 8°, égal à celui du tronçon tronconique 31 du répartiteur 3 afin que l'alésage 51 soit emmanché autour du tronçon 31 et viennent en contact avec la surface périphérique de la partie saillante 311 pour fermer les rainures 314 contenant les fibres optiques 1, comme montré à la Fig.1. A cette position, une rainure radiale 53 pratiquée dans la face avant du fourreau 5, à l'opposé du câble, reçoit un ergot 33 emmanché à force radialement dans le répartiteur 3, au niveau de la surface de dégagement 313 et entre deux rainures composites 314-301-322, afin de solidariser en rotation axiale le fourreau 5 et le répartiteur 3 et permettre un vissage de la bague de serrage 6 sur le fourreau. En effet, entre une collerette 55 et la face avant du fourreau 5 est prévu un filetage avant 54 autour duquel est vissé un taraudage arrière 60 de la bague de serrage 6. A proximité de la collerette 55 et du côté du câble, le fourreau est doté d'un filetage arrière 56 pour recevoir un écrou 9 en vue de fixer le dispositif d'épanouissement D à une platine P, comme on le verra dans la suite.

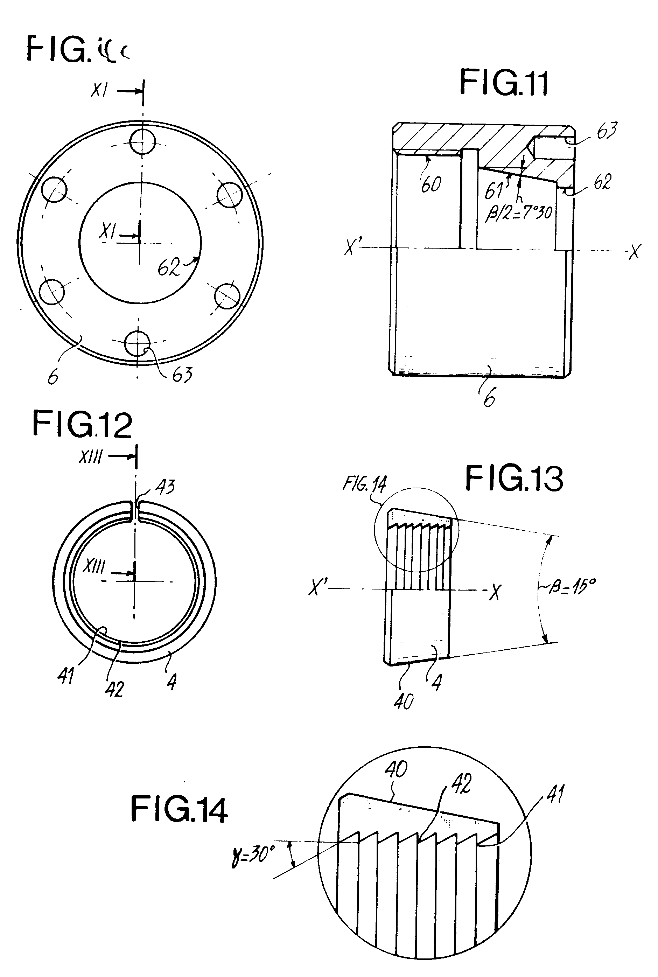

Comme montrée aux Figs.10 et 11, la bague de serrage 6 comporte, outre le taraudage arrière 60, un alésage tronconique avant 61 convergeant vers l'avant et débouchant vers l'extérieur à travers un alésage cylindrique 62 de faible longueur. Comme montré à la Fig.1, le taraudage 60 a un diamètre nettement supérieur à celui de la collerette 30 du répartiteur et à celui pris au sommet de l'ergot 33 afin d'enfermer ceux-ci lors de l'accouplement de la bague 6 au fourreau 5. La grande base de l'alésage tronconique 61 a un diamètre sensiblement supérieur à celui de la collerette 30, tandis que la petite base de l'alésage tronconique 61 a un diamètre supérieur à celui de la partie saillante cylindrique avant 321 du répartiteur afin de permettre une introduction de la bague fendue 4 entre l'alésage tronconique 61 et la partie saillante 321. Le diamètre de l'alésage cylindrique avant 62 est sensiblement supérieur à celui de la partie 321 afin d'être emmanché avec jeu sur celle-ci. Dans la face avant de la bague de serrage 6, à l'opposé du fourreau, sont prévus six trous borgnes longitudinaux 63 destinés à recevoir des ergots d'une clé pour le vissage de la bague autour du filetage avant 54 du fourreau.

La bague fendue 4 est montrée aux Figs.12 et 13. Elle offre une surface tronconique externe 40 pour coopérer avec l'alésage 61 de la bague de serrage 6, ayant typiquement un angle au sommet $\beta$ de 15°. Les diamètres des grandes bases de la surface 40 et de l'alésage 61 sont égaux, et la longueur de la bague 4 est plus petite que celle de l'alésage 61.

Comme montré en détail à la Fig.14, la bague 4 comporte un alésage cylindrique 41 ayant des cannelures circulaires 42 en dents de scie. Le diamètre intérieur de l'alésage 41 pris au sommet des cannelures 42, formant des angles vifs internes typiquement de $\gamma$ = 30° par rapport à l'axe X'X, est égal au diamètre externe de la partie saillante avant 321 du répartiteur 3 afin que les sommets des cannelures poussent et pressent les gaines de protection 11 dans les rainures 322 et les immobilisent dans celles-ci pour éviter tout retrait involontaire des gaines de protection 11 des rainures 322 au cours de manipulations des gaines, nécessaires notamment au lovage des fibres gainées 11 et au raccordement des fibres 1 à celles d'autres câbles à fibres optiques.

La bague 4 est pourvue également d'une fente longitudinale 43 ayant une largeur inférieure au diamètre d'une gaine 11 afin d'introduire les gaines de fibre 11 l'une après l'autre dans les rainures respective 322, en superposant successivement la fente 43 au-dessus des rainures 322 par des petites rotations axiales de la bague 4, ici de 360°/10 = 36°. Comme on le verra dans la suite, après introduction de toutes les gaines 11 dans les rainures 322, la bague fendue 4 est poussée par l'alésage tronconique 61 de la bague 6 contre la collerette 30 du répartiteur 3 au cours du vissage de la bague 6 sur le filetage 54 du fourreau 5, et les sommets des cannelures 42 strient sensiblement les gaines 11 pour les immobiliser dans les rainures 322.

Comme montré en coupe à la Fig.7, le répartiteur 3 comprend à partir de son extrémité arrière, du côté du câble 2, un alésage cylindrique rainuré 34 ayant une faible longueur par rapport au pas des rainures hélicoïdales 23 du jonc 21, un alésage cylindrique intermédiaire de dégagement 35 ayant un diamètre sensiblement plus grand que celui de l'alésage 34, et un troisième alésage cylindrique 36 ayant une extrémité avant taraudée 360. Le diamètre de l'alésage 36 est supérieur à celui de l'alésage intermédiaire 35 et forme avec celui-ci un épaulement circulaire interne 361.

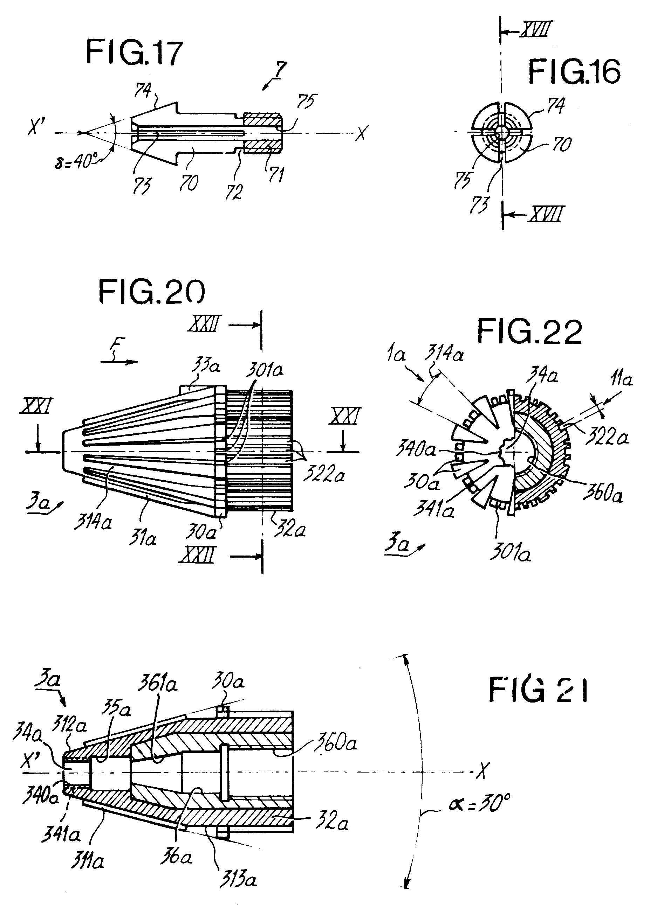

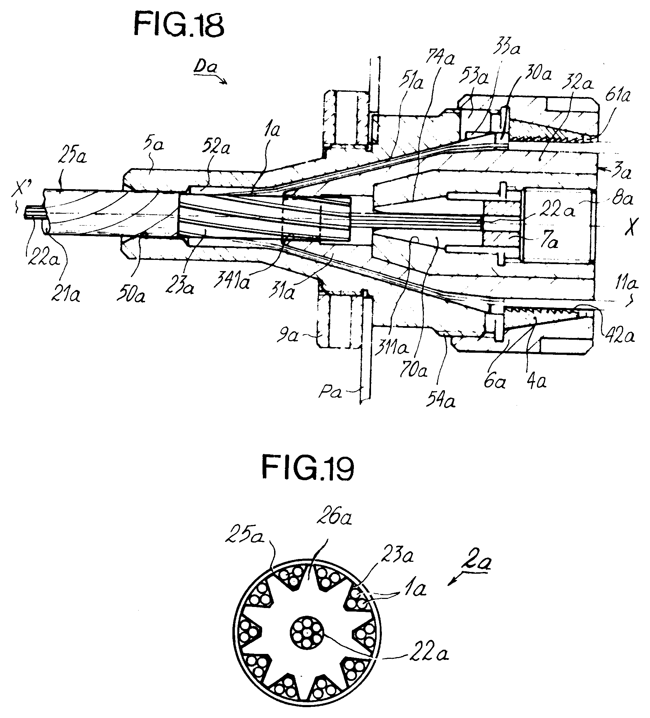

Selon la réalisation illustrée en détail à la Fig.15, l'alésage arrière 34 du répartiteur comporte des rainures longitudinales 340, ou de préférence hélicoïdales comme les rainures de jonc 23. L'alésage 34 a une section transversale sensiblement complémentaire de celle du jonc 21 du câble 2 afin que des filets 26 formés entre les rainures péariphériques 23 à l'extrémité du jonc 21 engrennent dans les rainures 340 et ainsi solidarisent en rotation le jonc avec le répartiteur. Comme montré à la Fig.1, une extrémité sciée du jonc 21 de laquelle émerge une extrémité de l'armature centrale 22, est glissée dans l'alésage 34 jusqu'à environ la moitié de la longueur de l'alésage 35. Selon d'autres réalisations, l'alésage 34 ne peut comporter qu'un filet ou doigt 341, tel que celui formé entre deux rainures voisines 340 et montré à la Fig.15, pour engrener dans une rainure 23 du jonc, ou bien deux ou plusieurs filets ou doigts, équirépartis circulairement comme des rainures correspondantes 23 du jonc.

Le long alésage 36 du répartiteur est destiné à recevoir l'élément pinçant 7 et la vis de serrage 8.

En référence aux Figs.16 et 17, l'élément pinçant 7 comporte, à l'arrière, quatre mâchoires longitudinales identiques 70 et, à l'avant, un tampon cylindrique 71. Les mâchoires 70 sont équiréparties autour de l'axe X'X et ont des sections transversales sensiblement en quart de cercle. Les mâchoires 70 et le tampon 71 peuvent être délimités entre eux par une gorge circulaire 72 pour faciliter un flêchissement radial des mâchoires vers l'axe longitudinal X'X. Les mâchoires sont séparées par des fentes longitudinales 73, ayant une largeur typiquement de 1 mm, s'étendant jusqu'à la gorge 72. L'ensemble des mâchoires 70 offre une extrémité arrière tonconique 74, ayant typiquement un angle au sommet $\delta$ = 40°, convergeant vers une face sciée du jonc 21, comme montré à la Fig.1. La grande base de l'extrémité 74 a un diamètre inférieur à celui de l'alésage 36, mais supérieur à celui de l'alésage intermédiaire 35 afin que la surface tronconique de l'extrémité 74 puisse être poussée contre l'épaulement 361 interne au répartiteur pour pincer l'armature 22. La petite base de l'extrémité 74, de préférence chanfreinée intérieurement, a un diamètre inférieur à celui de l'alésage 35 et compris entre les diamètres de l'armature 22 et du jonc 21. Le reste de l'ensemble des mâchoires 70 et du tampon 71 forment un cylindre ayant un diamètre inférieur à celui de l'alésage 36. Un conduit cylindrique 75 traverse axialement l'élément pinçant 7 pour recevoir à glissement une extrémité coupée de l'armature 22 et dégagée du jonc 21.

Comme montré à la Fig.1, la vis de serrage 8 est une vis sans-tête comportant un tronçon cylindrique arrière fileté 80 et un tronçon cylindrique avant de préhension 81. Le tronçon 80 est vissé dans l'extrémité taraudée 360 du répartiteur en vue de pousser l'élément 7 vers le jonc scié 21 et par suite l'extrémité 74 contre l'épaulement 361 pour rapprocher les mâchoires 70 et pincer l'armature 22. Le vissage de la vis 8 est effectué au moyen d'une clé, s'adaptant sur le tronçon de préhension 81 qui offre, selon la réalisation illustrée, un trou borgne axial 82 à section transversale hexagonale.

Pour obtenir l'épanouissement des fibres 1 sortant du câble 2 suivant une répartition cylindrique ayant un diamètre plus grand que celui du jonc, ici sensiblement égal au diamètre du tronçon avant 32 du répartiteur, et pour immobiliser les extrémités des gaines 11 afin de les rendre solidaires du câble, on procède aux opérations suivantes, en référence à la Fig.1. Il est à noter que le dispositif d'épanouissement D peut être précédé d'un presse-étoupe connu pour fixer le câble gainé à une paroi externe d'un boîtier de raccordement de fibre optique.

Le fourreau 5, si nécessaire avec l'écrou 9, est d'abord enfilé sur le câble 2, en arrière d'une extrémité EG de la gaine de câble 25 à partir de laquelle le câble est à dégainer, par glissement de l'alésage 50 sur la gaine 25.

La gaine 25 du câble 2 est retirée sur une grande longueur du câble déterminée en fonction de la longueur des fibres nécessaire aux opérations de lovage et de raccordement des fibres qui n'appartiennent pas au domaine de l'invention. Les fibres 1 sont sorties des rainures 23 du jonc dégainé 21 à partir de l'extrémité gainée EG du câble en arrière de laquelle se trouve temporairement le fourreau 5. Un fil très fin (non représenté), par exemple en cuivre, est torsadé autour de chaque fibre libérée afin d'enfiler l'extrémité libre du fil dans une gaine 11 et tirer la fibre dans la gaine de protection 11. Par exemple, une gaine de protection 11 a des diamètres externe et interne de 1,45 mm et 0.85 mm pour recevoir une fibre optique 1 ayant un diamètre externe de 0,125 mm et un diamètre de coeur égal à 0,050 mm.

Puis l'armature 22 et le jonc 21 sont sciés devant l'extrémité gainée EG du câble à une longueur L de celle-ci qui est sensiblement égale à celle du fourreau 5. Une portion de l'armature 22 ayant une longueur sensiblement inférieure à celle de l'élément pinçant 7 est ensuite dégagée de l'extrémité du jonc 22, par sciage de celle-ci.

A ce stade, on procède à la fixation du répartiteur 3 à l'extrémité dégainée du câble 2. Le répartiteur 3 est enfilé sur l'extrémité dégainée du jonc 21 dépourvue de fibres, formant tourillon, en prenant soin d'écarter les fibres 1, et en ajustant les doigts 341 de l'alésage arrière 34 dans les rainures de jonc 23. L'extrémité dégainée du jonc 21 pénètre jusqu'à mi-longueur de l'alésage intermédiaire 35 du répartiteur environ. L'élément pinçant 7 est ensuite introduit dans le répartiteur, et enfilé sur l'extrémité dégagée de l'armature de câble 22 jusqu'à ce que les mâchoires 70 butent contre l'épaulement interne 361 du répartiteur, devant la face sciée du jonc. La vis 8 est vissée dans le taraudage 360 du répartiteur. Dès que la face arrière de la vis 8 bute contre le tampon 71 de l'élément pinçant 7, le répartiteur 3 solidaire en rotation avec le jonc 21 est sensiblement translaté vers l'avant, et l'épaulement 361 interne au répartiteur ripe sur l'extrémité tronconique 74 des mâchoires qui se rapprochent vers l'armature 22. En fin de vissage de la vis 8, l'épaulement 361 serre les extrémités des mâchoires 70 qui pincent fermement l'armature 22, et l'élément 7 est emprisonné entre l'épaulement 361 devant la face extrême sciée du jonc d'une part, et la face arrière de la vis 8 d'autre part. A ce stade, le répartiteur 3 est ancré au câble 2.

Selon une autre variante, l'effet de poussée et butée radiale de l'épaulement 361 du répartiteur 3 est remplacé ou est conjugué à celui d'un épaulement ou d'un alésage tronconique pratiqué dans la face avant sciée du jonc du câble 21 et recevant les extrémités arrière tronconiques des mâchoires 70.

Des portions des fibres 1 sortant directement de l'extrémité gainée EG du câble, et des extrémités d'entrée arrière des gaines de protection 11 enveloppant les fibres et positionnées sensiblement en avant de la collerette 30 du répartiteur, sont introduites une à une dans les rainures composites 314-301-322 du répartiteur. Pour ce faire, la bague fendue 4 est enfilée à glissement doux autour du tronçon cylindrique 32 du répartiteur jusqu'en butée contre la collerette 30, avant tout rabattement des fibres 1 et gaines 11 dans les rainures du répartiteur. Puis pour chaque fibre à introduire on opère de la manière suivante. La fente 43 de la bague 4 est superposée radialement à une rainure du répartiteur 322 qui est sensiblement en alignement longitudinale avec l'extrémité de la rainure de jonc 23 de laquelle émerge la fibre optique 1 à introduire. L'extrémité d'entrée arrière de la gaine 11 de la fibre est glissée sensiblement à force dans la fente 43 et appliquée contre le fond de la rainure 322 ; simultanément, la portion libre de la fibre 1 sans gaine 11 est appliquée au fond des rainures 314 et 301 alignées avec la rainure précitée 322. La bague 4 est alors tournée, ici de 36°, afin d'amener la fente 43 en superposition avec une rainure voisine 322 pour introduction d'une autre fibre. Au cours de la rotation de la bague 4, les cannelures internes 42 enfoncent la gaine 11 dans la rainure 322.

Lorsque toutes les fibres et gaines sont épanouies et réparties dans les rainures du répartiteur 3 suivant des opérations d'introduction successives analogues aux précédentes, le fourreau 5 est glissé sur la gaine 25 du câble jusqu'à ce que l'ergot radial 33 du répartiteur pénètre dans la fente avant 53 du fourreau. A ce stade, l'avant de l'alésage tronconique 51 coiffe la partie saillante 311 du répartiteur et ferme les rainures 314 contenant les fibres introduites 1, et l'arrière de l'alésage tronconique 51 et l'alésage intermédiaire 52 du fourreau forment avec le jonc 21 une chambre annulaire traversée librement par les fibres sortant du câble. Puis, la bague de serrage 6 est raccordée au fourreau 5, en vissant le taraudage 60 autour du filetage avant 54 du fourreau. A la fin de ce vissage, l'alésage tronconique 61 de la bague de serrage 6 glisse sur la surface externe tronconique 40 de la bague fendue 4, pousse la bague 4 à l'encontre de la collerette de répartiteur 30 et rétrécit la fente 43. Le rétrécissement de la fente 43 provoque un resserrement de l'alésage 41 de la bague fendue autour de la partie saillante rainurée 321 du répartiteur, une faible pénétration des cannelures 42 dans les gaines de fibre 11 et un coincement des gaines 11 entre les cannelures 42 et les rainures 322. Dans ces conditions, les gaines sont solidaires fermement du dispositif D et ne peuvent être retirées de celles-ci suite à des opérations éventuelles de traction au cours d'opérations de lovage et de reccordement des fibres.

Selon l'aménagement du boîtier de raccordement, le dispositif d'épanouissement est fixé à une platine P qui peut être une paroi ou une cloison du boîtier ou une partie d'un support fixée sur le fond du boîtier. Comme montré à la Fig.1, la portion filetée arrière 56 du fourreau 5 est enfilée dans une fente de la platine, ou a été enfilée à travers un orifice de la platine en ayant pris soin d'avoir enfilé le câble à travers l'écrou 9 et cet orifice avant les opérations d'épanouissement des fibres et d'assemblage du dispositif. L'écrou 9 est vissé sur le filetage 56 et enserre avec la collerette 55 du fourreau la platine P afin de fixer le dispositif D dans le boîtier.

Selon d'autres réalisations, le dispositif est adapté pour épanouir des groupes de fibres sortant respectivement de rainures d'un jonc de câble.

Un dispositif d'épanouissement Da montré à la Fig.18 est destiné à être fixé à une extrémité de câble 2a à trente fibres 1a. Un jonc 21a du câble 2a comporte dix rainures périphériques hélicoïdales 23a dans chacun desquelles est logé un groupe de trois fibres 1a, comme montré schématiquement à la Fig.19. Dans les Figs.18 et 19, les différentes pièces et parties de pièces mises en oeuvre dans le dispositif Da sont désignées par des mêmes repères que celles analogues dans le dispositif D montrées aux Figs.1 et 3, avec adjonction de la lettre a. Il en est de même dans les Figs.20, 21 et 22 montrant l'embout répartiteur 3a selon cette seconde réalisation.

Comme montré en particulier à la Fig.20, le tronçon tronconique 31a du répartiteur 3a comporte dix rainures longitudinales 314a.

Chaque rainure 314a est propre à recevoir trois fibres optiques juxtaposées 1a d'un groupe, sortant d'une même rainure 23a du jonc 21a. Chaque rainure 314a débouche dans trois rainures 301a pratiquées dans la collerette 30a de l'embout 3a et recevant les trois fibres respectives 1a. En alignement longitudinal avec les trois rainures 301a précédentes, trois rainures plus larges 322a sont prévues dans le tronçon cylindrique 32a de l'embout pour recevoir les extrémités d'entrée des gaines de protection 11a des trois fibres optiques précitées, comme montré à la Fig.22.

Par ailleurs, comme montré à la Fig.18, l'embout répartiteur 3a est formé par l'assemblage d'une bague externe tronconique en matière plastique et d'une bague interne métallique. La bague interne contient l'élément pinçant 7a et la vis de poussée 8a et offre un épaulement de butée tronconique 311a complémentaire de l'extrémité tronconique 74a des mâchoires 70a de l'élément pinçant.

## Revendications

1. Dispositif pour épanouir des fibres optiques (1) sortant d'une extrémité d'un câble (2), caractérisé en ce qu'il comprend un embout (3) fixable coaxialement à l'extrémité du câble (2) et comportant un tronçon de révolution (32) ayant des premières rainures externes longitudinales (322), dans chaque première rainure (322) étant logée une extrémité d'une gaine de protection (11) contenant avec jeu une fibre (1) et s'étendant au-delà du câble, les premières rainures (322) ayant une profondeur sensiblement inférieure au diamètre des gaines de protection (11), une bague fendue (4) ayant une fente longitudinale (43) et entourant le tronçon de révolution (32), et des moyens (6) pour resserrer la bague fendue (4) par rétrécissement de la fente (43) afin d'enfoncer et coincer les extrémités des gaines de protection (11) dans les premières rainures (322).

2. Dispositif conforme à la revendication 1, caractérisé en ce que la bague fendue (4) comporte un alésage (41) ayant des cannelures (42), de préférence en dents de scie, et à section transversale circulaire.

3. Dispositif conforme à la revendication 1 ou 2, caractérisé en ce que la fente (43) de la bague fendue a une largeur sensiblement inférieure au diamètre des gaines de protection (11).

4. Dispositif conforme à l'une quelconque des revendications 1 à 3, caractérisé en ce que l'embout (3) comporte une collerette (30) ayant des deuxièmes rainures (301) longitudinales alignées respectivement avec les premières rainures (322) et recevant chacune une fibre optique (1), la collerette formant de préférence une butée axiale pour la bague fendue (4).

5. Dispositif conforme à l'une quelconque des revendications 1 à 4, le câble (2) comportant une âme sous la forme d'un jonc (21) ayant des rainures périphériques (23) contenant les fibres (1), caractérisé en ce que l'embout (3) comporte un alésage (34) comportant au moins un doigt saillant (341) s'engageant dans l'une des rainures (23) du jonc (21).

6. Dispositif conforme à la revendications 5, caractérisé en ce que l'alésage (34) de l'embout (3) et le jonc (21) ont des sections transversales sensiblement complémentaires.

7. Dispositif conforme à l'une quelconque des revendications 1 à 6, le câble (2) comportant une armature centrale (22), caractérisé en ce qu'il comprend des moyens (7, 8) logés au moins en partie dans l'embout (3) pour fixer l'embout (3) à une extrémité de l'armature (22) saillant à l'extrémité (21) du câble (2).

8. Dispositif conforme à la revendication 7, caractérisé en ce que les moyens pour fixer l'embout comprennent des moyens (7) pour pincer une extrémité de l'armature (22) saillante à l'extrémité du câble (2), et des moyens (8, 361) déplaçables dans l'embout (3) pour pousser les moyens pour pincer (7) contre l'extrémité (21) du câble (2) et contre l'embout afin que ceux-ci pincent l'extrémité saillante de l'armature.

9. Dispositif conforme à la revendication 7, caractérisé en ce que les moyens pour fixer comprennent un élément pinçant (7) enfilé autour de l'extrémité de l'armature (22) saillante à l'extrémité du câble (2), ledit élément pinçant comportant au moins deux mâchoires longitudinales (70) coopérant en butée avec un épaulement (361) interne à l'embout (3), et une vis (8) vissée dans une extrémité saillante de l'embout pour pousser l'élément pinçant (7) contre l'épaulement (361) afin de rapprocher les mâchoires (70) et pincer l'extrémité saillante de l'armature (22).

10. Dispositif conforme à l'une quelconque des revendications 1 à 9, caractérisé en ce que les moyens pour resserrer comportent une bague de serrage (6) ayant un alésage tronconique (61) coopérant avec une surface tronconique externe (40) de le bague fendue (4), la bague de serrage (6) étant glissée longitudinalement, de préférence par vissage autour d'un fourreau (5) entourant l'embout (3) et solidaire de celui-ci afin de resserrer la bague fendue (4) autour du tronçon de révolution (32) de l'embout (3) et pousser axialement la bague fendue (4) contre une butée (30) intégrée à l'embout (3), en vissant la bague de serrage (6).

11. Dispositif conforme à l'une quelconque des revendications 1 à 9, caractérisé en ce que l'embout (3) comporte un second tronçon de révolution (31), de préférence tronconique et convergeant vers le câble, fixable autour de l'extrémité du câble (2), et ayant des troisièmes rainures externes longitudinales (314) respectivement en alignement avec une ou plusieurs premières rainures (322), chaque troisième rainure (314) recevant de préférence une ou plusieurs fibres optiques (1) sortant d'une même rainure périphérique (23) d'une âme (22) du câble.

12. Dispositif conforme à la revendication 11, caractérisé en ce qu'il comprend un fourreau (5) ayant à une extrémité, un alésage enfilé autour de l'extrémité du câble (2), et à une autre extrémité, un alésage (51) coiffant le second tronçon (31) de l'embout (3) afin de fermer les troisièmes rainures (314) contenant les fibres (1).

13. Dispositif conforme à la revendication 12, caractérisé en ce que le fourreau (5) comporte une fente radiale (53) coopérant avec un ergot saillant (33) de l'embout (3) pour solidariser en rotation le fourreau et l'embout.

14. Dispositif conforme à la revendication 12 ou 13, caractérisé en ce qu'il comprend la bague de serrage (6) coiffant la bague fendue (4) et coopérant par vissage avec le fourreau (5), le vissage de la bague de serrage (6) rapprochant le fourreau (5) et la bague fendue (4) l'un vers l'autre, et contre des butées respectives (311, 30) intégrées à l'embout (3), le fourreau et la bague de serrage coiffant l'embout.

**15.** Dispositif conforme à l'une quelconque des revendications 12 à 14, caractérisé en ce qu'il comprend un écrou (9) vissable autour du fourreau (5) et coopérant avec une collerette (55) du fourreau pour enserrer une platine (P).

**16.** Procédé pour épanouir des fibres optiques (1) sortant d'une extrémité d'un câble (3) au moyen d'un dispositif conforme à l'une quelconque des revendications 1 à 15, caractérisé par

une fixation de l'embout (3) à l'extrémité du câble (2), et un enfilement de la bague fendue (4) autour du tronçon de révolution (32) de l'embout,

et pour chaque fibre, une superposition de la fente (43) de la bague fendue et d'une première rainure respective (322), une introduction de l'extrémité de la gaine de protection (11) de la fibre (1) dans la première rainure respective (322) à travers la fente (43), et un enfoncement de la gaine de protection (11) dans la première rainure respective (322) suite à une rotation partielle de la bague fendue pour superposer la fente et une autre première rainure,

et après introduction et enfoncement des extrémités de toutes les gaines de protection dans les premières rainures respectivement, un serrage de la bague fendue (4) autour du tronçon de révolution (32) de l'embout (3) par rétrécissement de la fente (43) afin de coincer les extrémités des gaines de protection (11) dans les premières rainures (322).

**17.** Procédé conforme à la revendication 16, caractérisé en ce que pendant le serrage de la bague fendue (4), des cannelures (42) internes à la bague fendue pénètrent sensiblement dans les gaines de protection (11).

**18.** Procédé conforme à la revendication 16 ou 17, caractérisé en ce que le serrage de la bague fendue (4) est obtenu par un glissement d'un alésage tronconique (61) d'une bague de serrage (6) contre une surface tronconique externe (40) de la bague fendue, la bague fendue (4) butant contre une butée saillante (30) de l'embout (3) à l'encontre du glissement d'alésage tronconique (61).

**19.** Procédé conforme à l'une quelconque des revendications 16 à 18, caractérisé en ce que la fixation de l'embout (3) à l'extrémité du câble (2) comprend l'enfilement d'une extrémité dégainée d'une âme, sous la forme d'un jonc rainuré (21) du câble, dans un alésage (31) de l'embout (3) ayant au moins un doigt (341) engrenant avec une rainure (23) du jonc.

**20.** Procédé conforme à l'une quelconque des revendications 16 à 19, caractérisé en ce que la fixation de l'embout à l'extrémité du câble comprend une introduction d'une extrémité dégagée d'une armature centrale (22) du câble (2) entre au moins deux mâchoires (70) logeables dans l'embout (3), et un pincement de l'extrémité d'armature entre les deux mâchoires.

**21.** Procédé conforme à la revendication 20, caractérisé en ce que le pincement consiste à exercer une poussée longitudinale des mâchoires (70) contre un épaulement (311) interne à l'embout (3) afin de rapprocher les mâchoires contre l'armature.

**22.** Procédé conforme à l'une quelconque des revendications 16 à 21, caractérisé par une introduction de chaque fibre optique (1) sortant du câble, dans une troisième rainure longitudinale (314) de l'embout (3) alignée sensiblement avec au moins l'une des premières rainures (322) recevant les gaines de protection (11), simultanément à l'introduction de la gaine de protection de la fibre dans la première rainure respective.

**23.** Procédé conforme à la revendication 22, caractérisé par la fermeture des troisièmes rainures (314) contenant les fibres (1) au moyen d'un fourreau (5) préalablement enfilé autour du câble (2) avant la fixation de l'embout (3) à l'extrémité du câble (2).

**24.** Procédé conforme aux revendications 18 et 23, caractérisé en ce que le glissement de l'alésage tronconique (61) de la bague de serrage (6) est obtenu par vissage de la bague de serrage autour du fourreau (5) contre la butée saillante (30) de l'embout (3).

## Claims

**1.** Device for spreading optical fibers (1) emerging from an end of a cable (2), characterized in that it comprises an end-piece (3) securable coaxially to the end of the cable (2) and having a revolution portion (32) having first longitudinal external grooves (322), in each first groove (322) being housed an end of a protective jacket (11) containing, with play, one fiber (1) and extending beyond the cable, the first grooves (322) having a depth substantially less than the diameter of the protective jackets (11), a split ring (4) having a longitudinal slot (43) and surrounding the revolution portion (32), and means (6) for contracting the split ring (4) by narrowing of the slot (43) thereby forcing in and jamming the ends of the protective jackets (11) in the first grooves (322).

2. Device according to claim 1, characterized in that the split ring (4) contains a bore (41) having splines (42), preferably shaped as a sawtooth and with a circular cross-section.

3. Device according to claim 1 or 2, characterized in that the slot (43) of the split ring has a width substantially less than the diameter of the protective jackets (11).

4. Device according to any one of claims 1 to 3, characterized in that the end-piece (3) has a flange (30) having second longitudinal grooves (301) aligned respectively with the first grooves (322) and each accommodating an optical fiber (1), the flange preferably forming an axial stop for the split ring (4).

5. Device according to any one of claims 1 to 4, the cable (2) comprising a core in the form of a ring (21) having peripheral grooves (23) containing the fibers (1), characterized in that the end-piece (3) contains a bore (34) having at least one projecting finger (341) engaging one of the grooves (23) of the ring (21).

6. Device according to claim 5, characterized in that the bore (34) of the end-piece (3) and the ring (21) have substantially complementary cross-sections.

7. Device according to any one of claims 1 to 6, the cable (2) comprising a central armature (22), characterized in that it comprises means (7, 8) housed at least partially in the end-piece (3) for securing the end-piece (3) to an end of the armature (22) projecting from the end (21) of the cable (2).

8. Device according to claim 7, characterized in that the end-piece securing means comprise means (7) for gripping one end of the armature (22) projecting from the cable end (2), and means (8, 361) movable into the end-piece (3) for pushing the gripping means (7) against the end (21) of cable (2) and against the end-piece in order that the latter grip the projecting end of the armature.

9. Device according to claim 7, characterized in that the securing means comprise a gripping member (7) strung around the end of the armature (22) projecting from the end of the cable (2), said gripping member having at least two longitudinal jaws (70) cooperating by abutting with a shoulder (361) inside the end-piece (3), and a screw (8) screwed into a projecting end of the end-piece for pushing the gripping member (7) against the shoulder (361), thereby bringing the jaws (70) together and gripping the projecting end of the armature (22).

10. Device according to any one of the claims 1 to 9, characterized in that the contracting means comprise a clamping ring (6) having a truncated bore (61), cooperating with an external truncated surface (40) of the split ring (4), the clamping ring (6) being slipped longitudinally preferably by screwing around a sleeve (5) surrounding the end-piece (3) and secured to the latter, thereby contracting the split ring (4) around the revolution portion (32) of the end-piece (3) and pushing the split ring (4) axially against a stop (30) integrated onto the end-piece (3) by screwing the clamping ring (6).

11. Device according to any one of claims 1 to 9, characterized in that the end-piece (3) has a second revolution portion (31), preferably truncated and converging towards the cable, securable around the cable end (2), and having third external longitudinal grooves (314) respectively in alignment with one or several first grooves (322), each third groove (314) housing preferably one or several optical fibers (1) emerging from a same peripheral groove (23) of a core (22) in the cable.

12. Device according to claim 11, characterized in that it comprises a sleeve (5) having at an end, a bore strung around the end of the cable (2), and at another end, a bore (51) covering the second portion (31) of the end-piece (3) thereby closing the third grooves (314) housing the fibers (1).

13. Device according to claim 12, characterized in that the sleeve (5) contains a radial slot (53) cooperating with a pin projecting (33) from the end-piece (3) thereby securing the sleeve and the end-piece rotationwise.

14. Device according to claim 12 or 13, characterized in that it comprises the clamping ring (6) covering the split ring (4) and screwable with the sleeve (5), the screwing of the clamping ring (6) bringing the sleeve (5) and the split ring (4) together and against respective stops (311, 30) integrated into the end-piece (3), the sleeve and clamping ring covering the end-piece.

**15.** Device according to any one of claims 12 to 14, characterized in that it comprises a nut (9) screwable around the sleeve (5) and cooperating with a flange (55) of the sleeve to hold a plate (P) captive.

**16.** Process for spreading optical fibers (1) emerging from an end of a cable (2), by means of a device according to any one of claims 1 to 15, characterized by
a fastening of the end-piece (3) to the end of the cable (2), and a stringing of the split ring (4) around the revolution portion (32) of the end-piece,
and for each fiber, a superposition of the slot (43) of the split ring and of a first respective groove (322), an entry of the end of the protective jacket (11) of the fiber (1) into the first respective groove (322) through the slot (43), and a forcing of the protective jacket (11) into the first respective groove (322) after partially rotating the split ring to superpose the slot and another first groove,
and after entrying and forcing the ends of all the protective jackets into the first grooves respectively, a clamping of the split ring (4) around the revolution portion (32) of the end-piece (3) by narrowing of the slot (43) thereby jamming the ends of the protective jackets (11) in the first grooves (322).

**17.** Process according to claim 16, characterized in that, whilst the split ring (4) is being clamped, splines (42) inside the split ring penetrate substantially into the protective jackets (11).

**18.** Process according to claim 16 or 17, characterized in that the clamping of the split ring (4) is obtained by a slipping of a truncated bore (61) of a clamping ring (6) against an external truncated surface (40) of the split ring, the split ring (4) abutting against a projecting stop (30) protuding on the end-piece (3) against the truncated bore (61) slipping.

**19.** Process according to any one of claims 16 to 18, characterized in that the fastening of the end-piece (3) to the end of the cable (2) includes the stringing of an unsheathed end of a core, in the form of a grooved ring (21) of the cable, into a bore (31) of the end-piece (3) having at least a finger (341) meshing with one groove (23) of the ring.

**20.** Process according to any one of claims 16 to 19, characterized in that the fastening of the end-piece to the cable end includes an entry of a cleared end of a central armature (22) of the cable (2) between at least two jaws (70) housable in the end-piece (3), and a gripping of the armature end between the two jaws.

**21.** Process according to claim 20, characterized in that the gripping consists in applying a longitudinal thrust of the jaws (70) against a shoulder (311) inside the end-piece (3) thereby bringing the jaws together against the armature.

**22.** Process according to any one of claims 16 to 21, characterized by an entry of each optical fiber (1) emerging from the cable, into a third longitudinal groove (314) of the end-piece (3) substantially aligned with at least one of the first grooves (322) housing the protective jackets (11), simulteanous to the entry of the protective jacket of the fiber into the first respective groove.

**23.** Process according to claim 22, characterized by the closing of the third grooves (314) containing the fibers (1) by means of a sleeve (5) previously strung around the cable (2) before the fastening of the end-piece (3) to the end of the cable (2).

**24.** Process according to claims 18 and 23, characterized in that the slipping of the truncated bore (61) of the clamping ring (6) is obtained by screwing of the clamping ring around the sleeve (5) against the protruding stop (30) of the end-piece (3).

**Patentansprüche**

**1.** Vorrichtung zum Aufspreizen von von einem Ende eines Kabels (2) herausgehenden optischen Fasern (1), dadurch **gekennzeichnet,** daß sie eine Ansatzhülse (3) umfaßt, die koaxial am Ende des Kabels (2) befestigbar ist und ein erste Außenlängsnuten (322) aufweisendes Rotationsendstück (32), wobei in jeder ersten Nut (322) ein Ende einer Schutzumhüllung (11) untergebracht ist, die eine Faser (1) mit Spiel enthält und sich über das Kabel hinaus erstreckt, wobei die ersten Nuten (322) eine Tiefe im wesentlichen kleiner als der Durchmesser der Schutzumhüllungen (11) aufweisen, wobei ein Schlitzring (4) einen Längsschlitz (43) aufweist und das Rotationsendstück (32) umgibt, und Mittel (6) umfaßt, um den Schlitzring (4) durch Verengen des Schlitzes (43) anzuziehen, um die Enden der Schutzumhüllungen (11) in den ersten Nuten (322) einzudrücken und zu verklemmen.

2. Vorrichtung nach Anspruch 1, dadurch **gekennzeichnet,** daß der Schlitzring (4) eine Bohrung (41) umfaßt, die Rillen (42) vorzugsweise mit Sägezahn und mit kreisförmigen Querschnitt aufweist.

3. Vorrichtung nach Anspruch 1 oder 2, dadurch **gekennzeichnet,** daß der Schlitz (43) des Schlitzrings eine Breite im wesentlichen kleiner als der Durchmesser der Schutzumhüllungen (11) aufweist.

4. Vorrichtung nach einem beliebigen der Ansprüche 1 bis 3, dadurch **gekennzeichnet,** daß die Ansatzhülse (3) einen Flansch (30), aufweisend zweite Längsnuten (301), umfaßt, die jeweils mit den ersten Nuten (322) ausgerichtet sind und jeweils eine optische Faser (1) aufnehmen, wobei der Flansch vorzugsweise einen axialen Anschlag für den Schlitzring (4) bildet.

5. Vorrichtung nach einem beliebigen der Ansprüche 1 bis 4, bei dem das Kabel (2) eine Seele in der Form einer Stange (21), aufweisend die Fasern (1) enthaltende periphere Nuten (23) umfaßt, dadurch **gekennzeichnet,** daß die Ansatzhülse (3) eine Bohrung (34) umfaßt, die wenigstens einen mit einer der Nuten (23) des Stabes (21) in Eingriff tretenden vorspringenden Zapfen (341) umfaßt.

6. Vorrichtung nach Anspruch 5, dadurch **gekennzeichnet,** daß die Bohrung (34) der Ansatzhülse (3) und der Stab (21) im wesentlichen komplementäre Querschnitte aufweisen.

7. Vorrichtung nach einem beliebigen der Ansprüche 1 bis 6, bei der das Kabel (2) eine zentrale Bewehrung (22) umfaßt, dadurch **gekennzeichnet,** daß sie wenigstens teilweise in der Ansatzhülse (3) untergebrachte Mittel (7, 8) umfaßt, um die Ansatzhülse (3) an einem Ende der am Ende (21) des Kabels (2) vorspringenden Bewehrung (22) zu befestigen.

8. Vorrichtung nach Anspruch 7, dadurch **gekennzeichnet,** daß die Mittel zum Befestigen der Ansatzhülse Mittel (7) zum Klemmen eines am Ende des Kabels (2) vorspringenden Endes der Bewehrung (22) und Mittel (8, 361) umfaßt, die in der Ansatzhülse (3) verschiebbar sind, um die Mittel zum Klemmen (7) gegen das Ende (21) des Kabels (2) und gegen die Ansatzhülse zu klemmen, damit diese das vorspringende Ende der Bewehrung klemmen.

9. Vorrichtung nach Anspruch 7, dadurch **gekennzeichnet,** daß die Mittel zum Befestigen ein Klemmelement (7), das um das am Ende des Kabels (2) vorspringende Ende der Bewehrung (22) aufgeschoben ist, wobei das Klemmelement wenigstens zwei im Anschlag mit einer Schulter (361) innen in der Ansatzhülse (3) zusammenwirkende Längsbacken (70) und eine zum Drücken des Klemmelementes (7) gegen die Schulter (361) in ein vorspringendes Ende der Ansatzhülse eingeschraubte Schraube (8) umfaßt, um die Backen (70) anzunähern und das vorspringende Ende der Bewehrung (22) zu klemmen.

10. Vorrichtung nach einem beliebigen der Ansprüche 1 bis 9, dadurch **gekennzeichnet,** daß die Mittel zum Klemmen einen Klemmring (6) umfassen, der eine mit einer kegelstumpfförmigen Außenfläche (40) des Schlitzrings (4) zusammenwirkende kegelstumpfförmige Bohrung (61) aufweist, wobei der Klemmring (6) in Längsrichtung vorzugsweise durch Verschrauben um eine Hülse (5) in Längsrichtung aufgeschoben ist, die die Ansatzhülse (3) umgibt und mit dieser fest verbunden ist, um den Schlitzring (4) um das Rotationsendstück (32) der Ansatzhülse (3) zu klemmen und den Schlitzring (4) axial gegen einen an der Ansatzhülse (3) integriert ausgebildeten Anschlag (30) bei Verschrauben des Klemmrings (6) zu drücken.

11. Vorrichtung nach einem beliebigen der Ansprüche 1 bis 9, dadurch **gekennzeichnet,** daß die Ansatzhülse (3) ein zweites Rotationsendstück (31) umfaßt, das vorzugsweise kegelstumpfförmig ist und zu dem Kabel konvergiert, befestigbar um das Ende des Kabels (2), und wobei sie dritte Längsaußennuten (314) jeweils in Ausrichtung mit einer oder mehreren ersten Nuten (322) aufweist, wobei jede dritte Nut (314) vorzugsweise eine oder mehrere aus einer selben peripheren Nut (23) einer Seele (22) des Kabels heraustretende optische Fasern (1) aufnimmt.

12. Vorrichtung nach Anspruch 11, dadurch **gekennzeichnet,** daß sie eine Hülse (5) umfaßt, die an einem Ende eine um das Ende des Kabels (2) gelegte Bohrung und am anderen Ende eine das zweite Endstück (31) der Ansatzhülse (3) überdeckende Bohrung (51) aufweist, um die die Fasern (1) enthaltenden dritten Nuten (314) zu verschließen.

**13.** Vorrichtung nach Anspruch 12, dadurch **gekennzeichnet,** daß die Hülse (5) einen mit einem von der Ansatzhülse (3) vorspringenden Vorsprung zusammenwirkenden radialen Schlitz (53) umfaßt, um bei Rotation die Hülse und die Ansatzhülse zu verbinden.

**14.** Vorrichtung nach Anspruch 12 oder 13, dadurch **gekennzeichnet,** daß sie den Klemmring (6) umfaßt, der den Schlitzring (4) überdeckt und durch Verschraubung mit der Hülse (5) zusammenwirkt, wobei die Verschraubung des Klemmrings (6) die Hülse (5) und den Schlitzring(4) einander an und gegen die in der Ansatzhülse (3) integral ausgebildeten jeweiligen Anschläge (311, 30) annähert, wobei die Hülse und der Klemmring die Ansatzhülse überdecken.

**15.** Vorrichtung nach einem beliebigen der Ansprüche 12 bis 14, dadurch **gekennzeichnet,** daß sie eine um die Hülse (5) aufschraubbare und mit einem Flansch (55) der Hülse zusammenwirkende Mutter (9) umfaßt, um eine Platte (P) zu klemmen.

**16.** Verfahren zum Aufspreizen der von einem Ende eines Kabels (3) heraustretenden optischen Faser (1) mittels einer Vorrichtung gemäß einem beliebigen der Ansprüche 1 bis 15, **gekennzeichnet** durch
- eine Befestigung der Ansatzhülse (3) am Ende des Kabels (2) und ein Aufschieben des Schlitzrings (4) um das Rotationsendstück (32) der Ansatzhülse,
- und für jede Faser eine Aufeinanderanordnung des Schlitzes (43) des Schlitzrings und einer ersten entsprechenden Nut (322), ein Einführen des Endes der Schutzumhüllung (11) der Faser (1) in eine erste entsprechende Nut (322) durch den Schlitz (43) und ein Eindrükken der Schutzumhüllung (11) in die erste entsprechende Nut (322) folgend auf eine Teilrotation des Schlitzrings, um den Schlitz und eine weitere erste Nut übereinander anzuordnen,
- und nach Einführung und Eindrücken der Enden sämtlicher Schutzumhüllungen jeweils in die ersten Nuten ein Klemmen des Schlitzrings (4) um das Rotationsendstück (32) der Ansatzhülse (3) durch Verengung des Schlitzes (43), um die Enden der Schutzumhüllungen (11) in den ersten Nuten (322) zu verklemmen.

**17.** Verfahren nach Anspruch 16, daurch **gekennzeichnet,** daß Innenrillen (42) am Schlitzring während des Klemmens des Schlitzrings (4) im wesentlichen in die Schutzumhüllungen (11) eindringen.

**18.** Verfahren nach Anspruch 16 oder 17, dadurch **gekennzeichnet,** daß das Klemmen des Schlitzrings (4) durch ein Verschieben einer kegelstumpfförmigen Bohrung (61) eines Klemmrings (6) gegen eine kegelstumpfförmige Außenfläche (40) des Schlitzrings erhalten wird, wobei der Schlitzring (4) gegen einen vorspringen Anschlag (30) der Ansatzhülse (3) entgegen dem Gleiten der kegelstumpfförmigen Bohrung (61) anstößt.

**19.** Verfahren nach einem beliebigen der Ansprüche 16 bis 18, dadurch **gekennzeichnet,** daß die Befestigung der Ansatzhülse (3) am Ende des Kabels (2) das Aufschieben eines enthülsten Endes einer Seele in der Form einer nutenversehenen Stange (21) des Kabels umfaßt, wobei sie in einer Bohrung (31) der Ansatzhülse (3) wenigstens einen mit einer Nut (23) der Stange im Eingriff befindlichen Vorsprung (341) aufweist.

**20.** Verfahren nach einem beliebigen der Ansprüche 16 bis 19, dadurch **gekennzeichnet,** daß die Befestigung der Ansatzhülse am Ende des Kabels eine Einführung eines von einer zentralen Bewehrung (22) des Kabels (2) freigegebenen Endes zwischen wenigstens zwei in der Ansatzhülse (3) unterbringbaren Backen (70) und eine Klemmung des Bewehrungsendes zwischen den beiden Backen umfaßt.

**21.** Verfahren nach Anspruch 20, dadurch **gekennzeichnet,** daß die Klemmung darin besteht, daß ein Längsdruck der Backen (70) gegen eine Innenschulter (311) der Ansatzhülse (3) ausgeübt wird, um die Backen gegen die Bewehrung anzunähern.

**22.** Verfahren nach einem beliebigen der Ansprüche 16 bis 21, **gekennzeichnet** durch eine Einführung jeder aus dem Kabel heraustretenden optischen Faser (1) in eine im wesentlichen mit wenigstens einer der die Schutzumhüllungen (11) aufnehmenden ersten Nuten (322) ausgerichtete dritte Längsnut (314) der Ansatzhülse (3) gleichzeitig mit der Einführung der Schutzumhüllung der Faser in die entsprechende erste Nut.

**23.** Verfahren nach Anspruch 22, **gekennzeichnet** durch das Fließen der die Fasern (1) enthaltenden dritten Nuten (314) mittels einer vorab um das Kabel (2) aufgeschobenen Hülse (5) vor der Befestigung der Ansatzhülse (3) am Ende des Kabels (2).

24. Verfahren nach den Ansprüchen 18 und 23, dadurch **gekennzeichnet,** daß das Verschieben der kegelstumpfförmigen Bohrung (61) des Klemmrings (6) durch Aufschrauben des Klemmrings um die Hülse (5) gegen den vorspringenden Anschlag (30) der Ansatzhülse (3) erhalten wird.

FIG.1

FIG.2

FIG.3

FIG.15

FIG.5

FIG.7

FIG.6

FIG.4

# FIG.9

# FIG.8

FIG. ((

FIG.11

63

60

61

β/2 = 7°30

62

6

X'

X

62

6

63

FIG.12

XIII

43

XIII

41

42

4

FIG.14

FIG.13

X'

X

~β=15°

40

4

FIG.14

40

42

41

γ=30°

# FIG.17

# FIG.16

# FIG.20

# FIG.22

# FIG 21

EP 0 243 234 B1

FIG.18

FIG.19

20